# EUROPEAN PATENT SPECIFICATION

(11) **EP 2 799 926 B1**
(45) Date of publication and mention of the grant of the patent: **04.01.2017**
(21) Application number: 12788103.5
(22) Date of filing: 10.10.2012
(51) Int. Cl.: G02F 1/1337

(54) **ARRAY SUBSTRATE, LIQUID CRYSTAL DISPLAY DEVICE AND ALIGNMENT RUBBING METHOD**
ARRAY-SUBSTRAT, FLÜSSIGKRISTALL-ANZEIGEVORRICHTUNG UND VERFAHREN ZUM REIBEN DER FLÜSSIGKRISTALL-AUSRICHTUNGSSCHICHT
SUBSTRAT EN RÉSEAU, DISPOSITIF D'AFFICHAGE À CRISTAUX LIQUIDES ET PROCÉDÉ DE FROTTEMENT D'ALIGNEMENT

(30) Priority: 31.12.2011 CN 201110460678
(43) Date of publication of application: 05.11.2014
(73) Proprietor: BOE Technology Group Co., Ltd., Beijing 100015 (CN); Chengdu BOE Optoelectronics Technology Co., Ltd., Chengdu, Sichuan 611731 (CN)
(72) Inventor: MO, Zailong, Beijing 100176 (CN); YANG, Yuqing, Beijing 100176 (CN); SHI, Tianlei, Beijing 100176 (CN); PARK, Seung Yik, Beijing 100176 (CN)
(74) Representative: Brötz, Helmut
(86) International application number: PCT/CN2012/082723
(87) International publication number: WO 2013/097515

(56) References cited:
- CN-A- 1 501 145
- CN-A- 1 607 424
- CN-A- 101 236 340
- CN-A- 101 441 369
- CN-A- 102 062 976
- CN-A- 102 629 058
- JP-A- 2004 170 454
- JP-A- 2009 250 991
- US-A1- 2009 128 727

## Description

### TECHNICAL FIELD

Embodiments of the present invention relate to an array substrate, a liquid crystal display apparatus and an alignment rubbing method.

### BACKGROUND

At present, liquid crystal displays (LCDs) with wide viewing angles mainly include those of an Advanced Super Dimension Switch (ADS) mode and an In-Plane Switching (IPS) mode. The ADS mode TFT-LCD forms a multi-dimensional electric field both a parallel electric field produced at edges of pixel electrodes on the same plane and a vertical electric field produced between a pixel electrode layer and a common electrode layer, so that liquid crystal molecules at all orientations, which are located directly above the electrodes and between the pixel electrodes in a liquid crystal cell, can be rotated and aligned, which enhances the work efficiency of planar-oriented liquid crystals and increases light transmittance. The Advanced-Super Dimensional Switching technology can improve the picture quality of TFT-LCDs and has advantages of high transmissivity, wide viewing angles, high opening ratio, low chromatic aberration, low response time, no push Mura, etc.

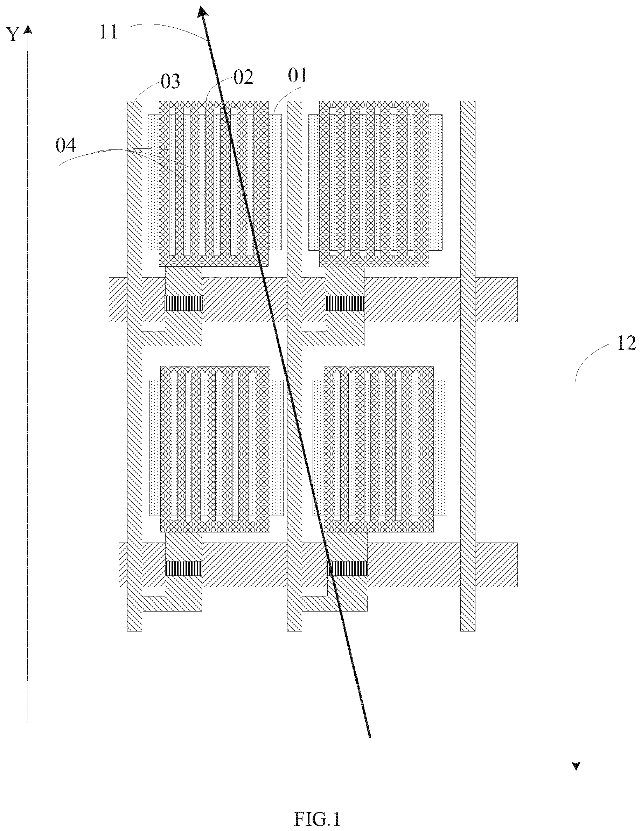

FIG. 1 shows a schematic illustration of an array substrate of an ADS mode LCD. On the base substrate, there are formed a plurality of pixel units arranged in an array form, and each pixel unit comprises a common electrode 01 (a plate-like electrode) and a pixel electrode 02 (a slit electrode comprising a plurality of slits) therein. The pixel electrode 02 is provided thereon with a plurality of slits 04 parallel to one another and parallel to a data line 03. After the formation of the pixel unit structure, a PI (polyimide) material is deposited on a surface thereof to form an alignment film, and alignment rubbing is required to be performed onto the alignment film to complete the manufacture of the array substrate. In FIG. 1, the data line 03 is taken as a reference line (in a longitudinal direction); in the coordinate system, the direction of the longitudinal coordinate Y is the same as the data-line-direction; the extending direction of the slits 04 of the pixel electrode 02 is the same as the data-line-direction; the forward direction 12 of the array substrate in the rubbing process is opposed to the Y-direction; and the rubbing direction 11 of the alignment film forms a certain angle with the slit-direction of the pixel electrode 02.

In the technique shown in FIG. 1, there is a comparatively small angle between the rubbing direction 11 of the alignment film and the opposite direction to the forward direction 12 of the array substrate, which results in a rather large relative velocity between the rubbing roller and the array substrate in the Y-direction during the relative movement of the rubbing roller and the array substrate, thus causes mutual damage between the rubbing roller and the array substrate, affects rubbing uniformity, and further leading to poor gradation for the prepared display device.
From US 2009/0128727 A1 it is known a liquid crystal display device. JP 2004-170454 A discloses a rubbing method.

### SUMMARY

Embodiments of the present invention provide an array substrate, a liquid crystal display apparatus and an alignment rubbing method, for enhancing the rubbing uniformity.

In one aspect of the present invention, there is provided an array substrate, comprising a gate line, a data line, and a pixel unit defined by the gate line and the data line intersecting each other, as well as an alignment film formed on the array substrate; wherein the pixel unit each comprises a thin film transistor, a plate-like first electrode, and a second electrode provided with parallel slits; and wherein a first non-zero angle is formed between the slit-direction of the second electrode and a data-line-direction, a second non-zero angle is formed between a rubbing direction of the alignment film and the slit-direction of the second electrode, and an angle formed between the rubbing direction of the alignment film and the data-line-direction is greater than the second non-zero angle, wherein the angle between the rubbing direction of the alignment film and the data-line-direction equals the first non-zero angle minus the second non-zero angle.

In another aspect of the present invention, there is provided a liquid crystal display apparatus, comprising: an array substrate and a color filter substrate assembled together to form a cell, wherein the array substrate is an array substrate as described above, and a rubbing direction of an alignment film on the color filter substrate is opposed to the rubbing direction of the alignment film of the array substrate.

In further another aspect of the present invention, there is provided an alignment rubbing method according to appended claim 7.

In the array substrate, the liquid crystal display apparatus and the alignment rubbing method provided by the embodiments of the present invention, on one hand, by setting a second non-zero angle between a rubbing direction of an alignment film and a slit-direction of a second electrode, the needs of a high aperture ratio and high transmittance are met, and thus the normal display of the liquid crystal display is ensured; on the other hand, by setting a first non-zero angle between the slit-direction of the second electrode and a data-line-direction, and letting the angle between the rubbing direction of the alignment film and the data-line-direction greater than the second non-zero angle, the relative velocity between the rubbing roller and the array substrate in their relative movement in the data-line-direction is reduced, so that the mutual damage between the rubbing roller and the substrate is reduced, thereby enhancing the rubbing uniformity.

### BRIEF DESCRIPTION OF THE DRAWINGS

In order to clearly illustrate the technical solutions of the embodiments of the invention, the drawings of the embodiments will be briefly described in the following; it is obvious that the described drawings are only related to some embodiments of the invention and thus are not limitative of the invention.
FIG. 1 is a top view of an array substrate in the prior art;
FIG. 2 is a top view of an array substrate provided by an embodiment of the present invention;
FIG. 3 is a schematic illustration of a relationship among a slit-direction, a rubbing direction, and a data-line-direction in the array substrate shown in FIG. 2;
   The relationship shown in FIG.3(a) is not according to the invention.
   The relationship shown in FIG.3(b) is according to the invention.
FIG. 4 is a top view of another array substrate provided by an embodiment of the present invention;
FIG. 5 is a schematic illustration of an alignment rubbing method provided by an embodiment of the present invention; and
FIG. 6 is a schematic illustration of a relationship among a slit-direction, a rubbing direction, and a data-line-direction in the alignment rubbing method shown in FIG. 5.
   The relationship shown in FIG.6(a) is not according to the invention. The relationship shown in FIG.6(b) is according to the invention.

### Reference numerals

01 - Common electrode; 02 - Pixel electrode; 03 - Data line; 04 - Slit; 05 - Gate line; 06 - Thin film transistor; 11 - Rubbing direction; 12 - Forward direction of a substrate; 13 - Slit-direction; 14 - Axial direction of a rubbing roller.

### DETAILED DESCRIPTION

In order to make objects, technical details and advantages of the embodiments of the invention apparent, the technical solutions of the embodiments will be described in a clearly and fully understandable way in connection with the drawings related to the embodiments of the invention. It is obvious that the described embodiments are just a part but not all of the embodiments of the invention. Based on the described embodiments herein, those skilled in the art can obtain other embodiment(s), without any inventive work, which should be within the scope of the invention.

An array substrate according to an embodiment of the present invention comprises a plurality of gate lines and a plurality of data lines, and these gate lines and data lines intersect one another and thus define pixel units arranged in a matrix, each pixel unit comprising a thin film transistor as a switching element and a pixel electrode for controlling the alignment of liquid crystal. In the following description, it is mainly directed to a single or a plurality of pixel units, but other pixel units may be formed in the same way.

### First embodiment

In all embodiments of the present invention, a data line is taken as a reference line, so that the direction of a longitudinal coordinate Y in a coordinate system is in accordance with the data-line-direction.

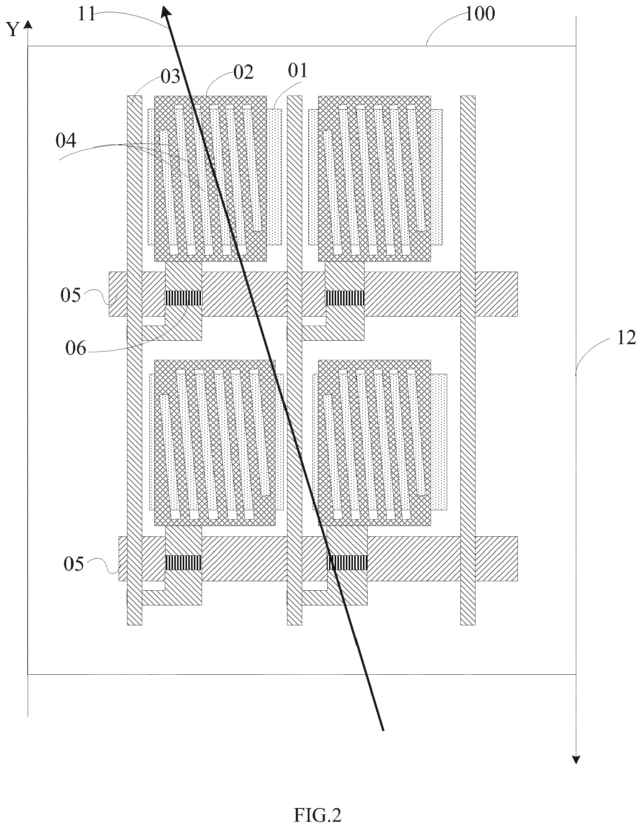

As shown in FIG. 2, an embodiment of the present invention provides an array substrate 100, comprising: gate lines 05, data lines 03, and a plurality of pixel units defined by the gate lines 05 and the data lines 03 intersecting one another. On a surface of the array structure of the array substrate, there is formed an alignment film. The alignment film is formed of, for example, a PI (polyimide) material.

Each of the pixel units comprises a thin film transistor 06, a plate-like first electrode, and a second electrode provided with slits 04. A first non-zero preset angle θ1 is present between the slit-direction 13 (i.e., the extending direction of the slits) of the second electrode and the data-line-direction Y, and a second non-zero preset angle θ2 is present between a rubbing direction 11 of the alignment film and the slit-direction 13 of the second electrode, moreover, the angle between the rubbing direction 11 of the alignment film and the data-line-direction Y is greater than the second non-zero preset angle θ2.

In this embodiment, the first electrode is formed from a first transparent electric-conductive layer in a pixel unit of the array substrate 100, and for example, it may typically be a first indium-tin oxide (ITO) layer; the second electrode is formed from a second transparent electric-conductive layer in the pixel unit of the array substrate 100, and for example, it may typically be a second ITO layer. In this embodiment of the present invention, since a multi-dimensional electric field is generated by the first and second electrodes of the pixel unit of the array substrate 100 to drive the liquid crystal, the second electrode is usually formed into a patterned electrode, and the pattern is typically elongated slits, and these slits may be enclosed on periphery or open at one end. In addition, of the first and second electrodes, the electrode that is connected with a drain of the thin film transistor 06 in the pixel unit is a pixel electrode, and the other is for example a common electrode connected with a common electrode line.

In one example of the embodiment, the first electrode is electrically connected with a common electrode line of the array substrate; the second electrode is electrically connected with a drain of the thin film transistor 06; as shown in FIG. 2, that is, in this example, the second electrode is a pixel electrode 02, and the first electrode is a common electrode 01. The pixel electrode 02 is provided thereon with a plurality of slits 04; the common electrode 01 has no slit provided thereon and is shaped into a plate. These slits 04, for example, are parallel to each other and enclosed on periphery. The slits 04 extend obliquely with respect to the gate line 05 (or the data lines 03), and hereafter the extending direction of the slits 04 is referred to as the slit-direction 13.

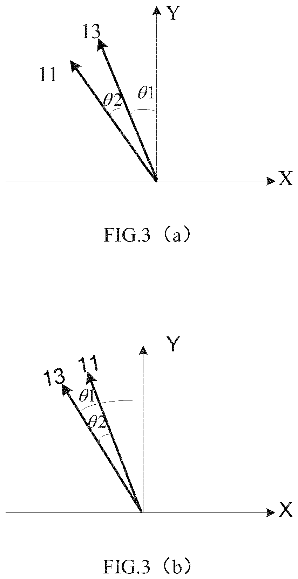

After the preparation of an array structure, comprising driving elements, of the array substrate, an alignment film is coated on the array structure, and then the alignment film is subject to an alignment rubbing operation. During the alignment film rubbing, as shown in FIG. 3 (a), when an angle formed between the rubbing direction 11 and the Y-direction is greater than an angle formed between the slit-direction 13 of the second electrode and the Y-direction, a first non-zero preset angle θ1 is present between the slit-direction 13 of the second electrode and the data-line-direction Y, and a second non-zero preset angle θ2 is present between the rubbing direction 11 of the alignment film and the slit-direction 13 of the second electrode. Thus it can be seen that the value of the angle between the rubbing direction 11 of the alignment film and the data-line-direction Y is the sum of the value of the first non-zero preset angle θ1 and the value of the second non-zero preset angle θ2. This makes the relative velocity between the rubbing roller and the array substrate in their relative movement in the Y-direction reduced, so that the mutual damage between the rubbing roller and the substrate is reduced, thereby enhancing the rubbing uniformity. Preferably, the first non-zero preset angle θ1 is in a range of 20-30 degrees, such an angle is easy to be achieved in the manufacturing process and makes the mutual damage between the rubbing roller and the substrate reduced, thereby enhancing the rubbing uniformity; preferably, the second non-zero preset angle θ2 is in a range of 5-9 degrees, and such an angle meets the needs of a high aperture ratio and high transmittance, and therefore the normal display of the liquid crystal display is ensured.

The relationship shown in FIG.3(a) is not according to the invention.
The relationship shown in FIG.3(b) is according to the invention.

As shown in FIG. 3(b), when an angle formed between the rubbing direction 11 and the Y-direction is less than an angle formed between the slit-direction 13 of the second electrode and the Y-direction, a first non-zero preset angle θ1 is present between the slit-direction 13 of the second electrode and the data-line-direction Y, and a second non-zero preset angle θ2 is present between the rubbing direction 11 of the alignment film and the slit-direction 13 of the second electrode. Thus it can be seen that, the value of the angle between the rubbing direction 11 of the alignment film and the data-line-direction is the difference of the value of the first non-zero preset angle θ1 minus the value of the second non-zero preset angle θ2. On condition that the angle between the rubbing direction 11 of the alignment film and the data-line-direction Y is ensured to be greater than the second non-zero preset angle θ2, the relative velocity between the rubbing roller and the array substrate in their relative movement in the Y-direction can be reduced likewise, so that the mutual damage between the rubbing roller and the substrate is reduced, thereby enhancing the rubbing uniformity. Preferably, the first non-zero preset angle θ1 is in a range of 20-30 degrees, such an angle is easy to be achieved in the manufacturing process, and makes the mutual damage between the rubbing roller and the substrate reduced, thereby enhancing the rubbing uniformity; preferably, the second non-zero preset angle θ2 is in a range of 5-9 degrees, and such an angle meets the needs of a high aperture ratio and high transmittance, and therefore the normal display of the liquid crystal display is ensured.

This embodiment provides an array substrate, which, on one hand, is provided with a second non-zero preset angle between a rubbing direction of an alignment film and a slit-direction of a second electrode so as to meet the needs of a high aperture ratio and high transmittance, thus ensuring the normal display of the liquid crystal display, and on the other hand, is provided with a first non-zero preset angle between the slit-direction of the second electrode and a data-line-direction, making the angle between the rubbing direction of the alignment film and the data-line-direction greater than the second non-zero preset angle, thus reducing the relative velocity between the rubbing roller and the array substrate in their relative movement in the Y-direction, so that the mutual damage between the rubbing roller and the substrate is reduced, thereby enhancing the rubbing uniformity.

### Second Embodiment

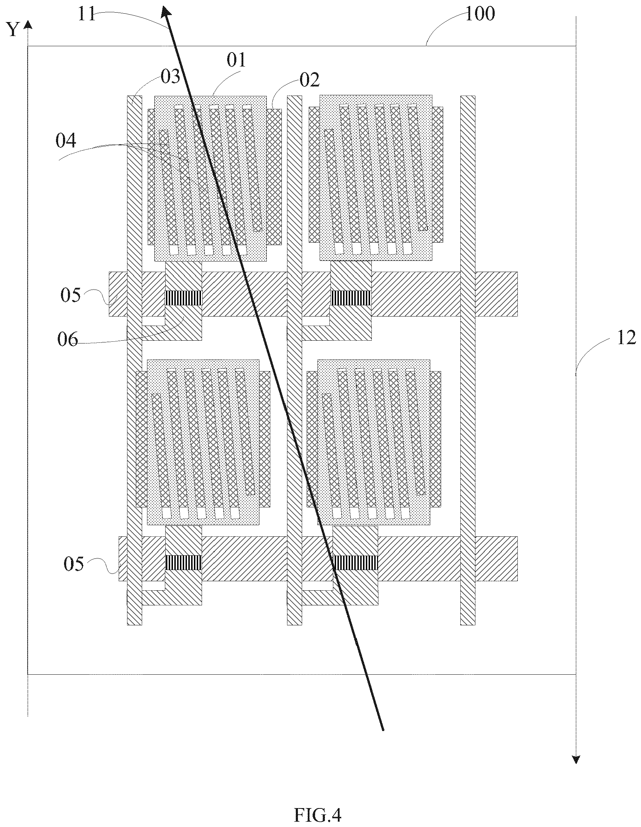

As shown in FIG. 4, this embodiment provides an array substrate 100, comprising: gate lines 05, data lines 03, and a plurality of pixel units defined by the gate lines 05 and the data lines 03 intersecting one another. On a surface of the array structure of the array substrate, there is an alignment film. The alignment film is formed of, for example, a PI (polyimide) material.

Each of the pixel units comprises a thin film transistor, a plate-like first electrode, and a second electrode provided with slits 04; a first non-zero preset angle θ1 is present between the slit-direction 13 (i.e., the extending direction of the slits) of the second electrode and the data-line-direction, and a second non-zero preset angle θ2 is present between a rubbing direction 11 of the alignment film and the slit-direction of the second electrode; moreover, the angle between the rubbing direction 11 of the alignment film and the data-line-direction Y is greater than the second non-zero preset angle θ2.

In this embodiment, the first electrode is formed from a first transparent electric-conductive layer formed in a pixel unit of the array substrate 100, for example, it may typically be a first indium-tin oxide (ITO) layer; the second electrode is formed from a second transparent electric-conductive layer formed in the pixel unit of the array substrate 100, for example, it may typically be a second ITO layer. In this embodiment of the present invention, since a multi-dimensional electric field is generated by the first and second electrodes of the pixel unit of the array substrate 100 to drive the liquid crystal, the second electrode is usually formed into a patterned electrode, and the pattern is typically elongated slits, and these slits may be enclosed on periphery or open at one end. In addition, in the first and second electrodes, the electrode that is connected with a drain of the thin film transistor 06 in the pixel unit is a pixel electrode, and the other is for example a common electrode connected with a common electrode line.

In one example of the embodiment, the first electrode is electrically connected with a drain of the thin film transistor 06; the second electrode is electrically connected with a common electrode line of the array substrate; as shown in FIG. 4, that is, in this example, the second electrode is a common electrode 01, and the first electrode is a pixel electrode 02. The common electrode 01 is provided thereon with a plurality of slits 04, while the pixel electrode 02 has no slit provided thereon and is shaped into a plate. These slits 04, for example, are parallel to each other, and enclosed on periphery. The slit 04 extends obliquely with respect to the gate line 05 (or the data lines 03), and hereafter the extending direction of the slits 04 is referred to as the slit-direction 13.

After the preparation of an array structure, comprising driving elements, of the array substrate, an alignment film is coated on the array structure, and then the alignment film is subject to an alignment rubbing operation. During the alignment film rubbing, as shown in FIG. 3 (a), when an angle formed between the rubbing direction 11 and the Y-direction is greater than an angle formed between the slit-direction 13 of the second electrode and the Y-direction, a first non-zero preset angle θ1 is present between the slit-direction 13 of the second electrode and the data-line-direction Y, and a second non-zero preset angle θ2 is present between the rubbing direction 11 of the alignment film and the slit-direction 13 of the second electrode. Thus it can be seen that the value of the angle between the rubbing direction 11 of the alignment film and the data-line-direction Y is the sum of the value of the first non-zero preset angle θ1 and the value of the second non-zero preset angle θ2. This makes the relative velocity between the rubbing roller and the array substrate in their relative movement in the Y-direction reduced. Thus the mutual damage between the rubbing roller and the substrate is reduced, thereby enhancing the rubbing uniformity. Preferably, the first non-zero preset angle θ1 is in a range of 20-30 degrees, such an angle is easy to be achieved in the manufacturing process, and makes the mutual damage between the rubbing roller and the substrate reduced, thereby enhancing the rubbing uniformity; preferably, the second non-zero preset angle θ2 is in a range of 5-9 degrees, and such an angle meets the needs of a high aperture ratio and high transmittance, and therefore the normal display of the liquid crystal display is ensured.

The relationship shown in FIG.3(a) is not according to the invention.
The relationship shown in FIG.3(b) is according to the invention.

As shown in FIG. 3(b), when an angle formed between the rubbing direction 11 and the Y-direction is less than an angle formed between the slit-direction 13 of the second electrode and the Y-direction, a first non-zero preset angle θ1 is present between the slit-direction 13 of the second electrode and the data-line-direction Y, and a second non-zero preset angle θ2 is present between the rubbing direction 11 of the alignment film and the slit-direction 13 of the second electrode. Thus it can be seen that, the value of the angle between the rubbing direction 11 of the alignment film and the data-line-direction is the difference of the value of the first non-zero preset angle θ1 minus the value of the second non-zero preset angle θ2. On condition that the angle between the rubbing direction 11 of the alignment film and the data-line-direction Y is ensured to be greater than the second non-zero preset angle θ2, this makes the relative velocity between the rubbing roller and the array substrate in their relative movement in the Y-direction reduced likewise, so that the mutual damage between the rubbing roller and the substrate is reduced, thereby enhancing the rubbing uniformity. Preferably, the first non-zero preset angle θ1 is in a range of 20-30 degrees, such an angle is easy to be achieved in the manufacturing process, and makes the mutual damage between the rubbing roller and the substrate reduced, thereby enhancing the rubbing uniformity; preferably, the second non-zero preset angle θ2 is in a range of 5-9 degrees, and such an angle meets the needs of a high aperture ratio and high transmittance, and therefore the normal display of the liquid crystal display is ensured.

This embodiment provides an array substrate, which, on one hand, is provided with a second non-zero preset angle between a rubbing direction of an alignment film and a slit-direction of a second electrode so as to meet the needs of a high aperture ratio and high transmittance, thus ensuring the normal display of the liquid crystal display, and on the other hand, is provided with a first non-zero preset angle between the slit-direction of the second electrode and a data-line-direction, making the angle between the rubbing direction of the alignment film and the data-line-direction greater than the second non-zero preset angle, thus reducing the relative velocity between the rubbing roller and the array substrate in their relative movement in the Y-direction, so that the mutual damage between the rubbing roller and the substrate is reduced, thereby enhancing the rubbing uniformity.

### Third Embodiment

This embodiment provides an alignment rubbing method used for an alignment film of an array substrate, the method comprising the steps as follows.

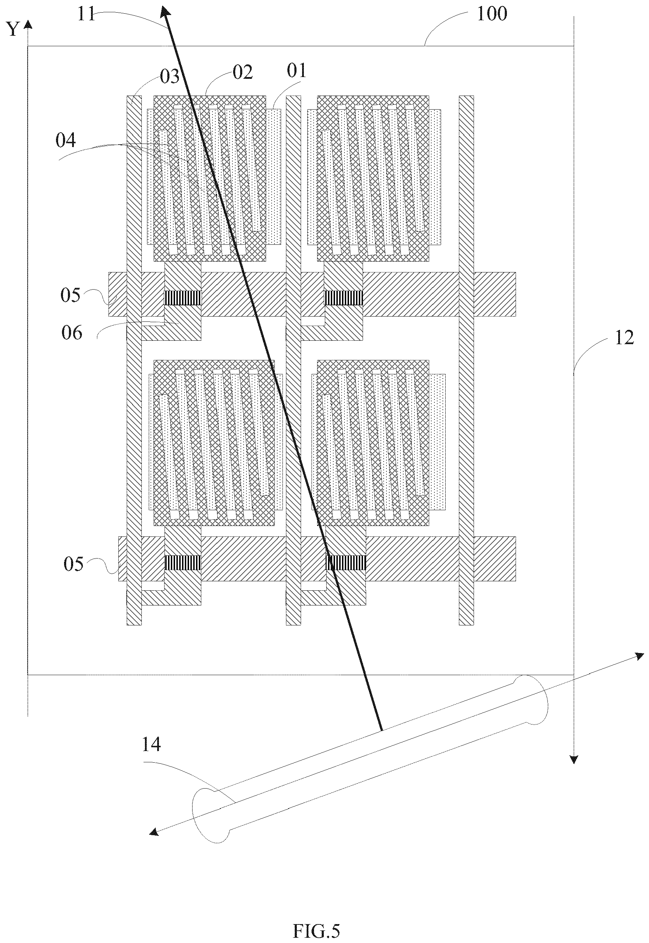

A schematic illustration of the operation of the rubbing method is shown as FIG. 5. First is to set a forward speed of an array substrate, as well as both an axial direction 14 and a rotating angular velocity of a rubbing roller; the linear direction 12, along which the forward speed of the array substrate is taken, is opposed to a data-line-direction 03 on the array substrate. A third non-zero preset angle θ3 is present between the axial direction 14 of the rubbing roller and the data-line-direction 03 on the array substrate, and a first non-zero preset angle θ1 is present between the data-line-direction Y and a slit-direction 13 of a second electrode on the array substrate.

The array substrate is moved in accordance with the set forward speed, and come into contact with the rubbing roller, and thus the rubbing roller rubs an alignment film formed on the surface of the array structure of the array substrate, so that a second non-zero preset angle θ2 is present between the rubbing direction 11 of the alignment film and the slit-direction 13 of the second electrode; the rubbing direction 11 of the alignment film is perpendicular to the axial direction 14 of the rubbing roller, and moreover the angle between the rubbing direction 11 of the alignment film and the data-line-direction is greater than the second non-zero preset angle.

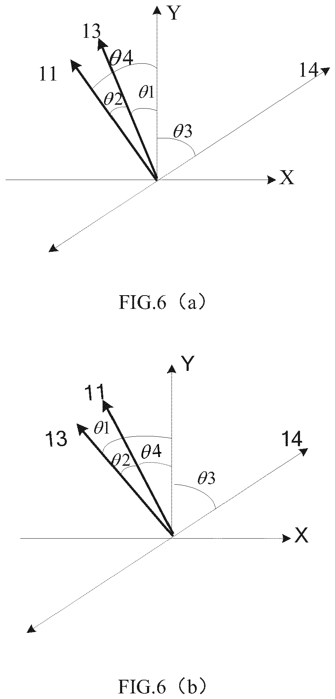

As shown in FIG. 6(a), when an angle formed between the rubbing direction 11 and the Y-direction is greater than an angle formed between the slit-direction 13 of the second electrode and the Y-direction, since the axial direction 14 of the rubbing roller is perpendicular to the rubbing direction 11 of the alignment film, the value of the complementary angle θ4 of the third non-zero preset angle θ3 is the sum of the value of the first non-zero preset angle θ1 and the value of the second non-zero preset angle θ2. The value of the complementary angle of the third non-zero preset angle θ3 is exactly the value of the angle between the rubbing direction of the alignment film and the data-line-direction. Thus it can be seen that, the value of the angle between the rubbing direction of the alignment film and the data-line-direction is the sum of the value of the first non-zero preset angle θ1 and the value of the second non-zero preset angle θ2.

The relationship shown in FIG.6(a) is not according to the invention.
The relationship shown in FIG.6(b) is according to the invention.

As shown in FIG. 6(b), when an angle formed between the rubbing direction 11 and the Y-direction is less than an angle formed between the slit-direction 13 of the second electrode and the Y-direction, since the axial direction 14 of the rubbing roller is perpendicular to the rubbing direction 11 of the alignment film, the value of the complementary angle θ4 of the third non-zero preset angle θ3 is the difference of the value of the first non-zero preset angle θ1 minus the value of the second non-zero preset angle θ2. The value of the complementary angle of the third non-zero preset angle is exactly the value of the angle between the rubbing direction of the alignment film and the data-line-direction. Thus it can be seen that, the value of the angle between the rubbing direction of the alignment film and the data-line-direction is the difference of the value of the first non-zero preset angle θ1 minus the value of the second non-zero preset angle θ2.

The alignment film, for example, formed of a PI (polyimide) material, is coated on a surface of the array structure of the array substrate.

This embodiment provides an alignment rubbing method, comprising setting a forward speed of an array substrate and an axial direction of a rubbing roller, letting the rubbing direction of the alignment film perpendicular to the axial direction of the rubbing roller, and the method, on one hand by setting a second non-zero preset angle to be present between a rubbing direction of an alignment film and a slit-direction of a second electrode, meets the needs of a high aperture ratio and high transmittance, thus ensuring the normal display of a liquid crystal display, and on the other hand, by setting a first non-zero preset angle to be present between the slit-direction of the second electrode and a data-line-direction, and letting the angle between the rubbing direction of the alignment film and the data-line-direction greater than the second non-zero preset angle, so that the relative velocity between the rubbing roller and the array substrate is reduced in their relative movement in the Y-direction, reduces the mutual damage between the rubbing roller and the substrate, thereby enhancing the rubbing uniformity.

An embodiment of the present invention further provides a liquid crystal display apparatus, comprising an array substrate and a color filter substrate, which are disposed opposite to each other, and the array substrate is any one of the array substrates described in the above embodiments. A rubbing direction of an alignment film on the color filter substrate is opposed to a rubbing direction of an alignment film on the array substrate. Liquid crystal is filled in the space formed between the array substrate and the color film substrate, and the alignment films both on the array substrate and on the color filter substrate are used for initial alignment of the liquid crystal molecules in contact with them, by means of micro grooves and the like formed by a rubbing operation.

The array substrate comprises gate lines, data lines, and pixel units defined by the gate lines and the data lines intersecting one another. On the array substrate, there is formed an alignment film. The pixel unit comprises a thin film transistor, a first electrode, and a second electrode provided with slits; a second non-zero preset angle is present between a rubbing direction of the alignment film and the slit-direction of the second electrode, thus the needs of a high aperture ratio and high transmittance are met, and therefore the normal display of the liquid crystal display is ensured; a first non-zero preset angle is present between the slit-direction of the second electrode and the data-line-direction, and moreover, the angle between the rubbing direction of the alignment film and the data-line-direction is greater than the second non-zero preset angle, thus the relative velocity between the rubbing roller and the array substrate in their relative movement in the data-line-direction is reduced, so that the mutual damage between the rubbing roller and the substrate is reduced, thereby enhancing the rubbing uniformity.

The protection scope of the present invention is defined by the claims.

## Claims

1. An array substrate (100) comprising a gate line (05), a data line (03), and a pixel unit defined by the gate line (05) and the data line (03) intersecting each other, as well as an alignment film formed on the array substrate;
wherein the pixel unit each comprises a thin film transistor (06), a plate-like first electrode, and a second electrode provided with parallel slits (04); and
wherein a first non-zero angle (θ1) is formed between the slit-direction (13) of the second electrode and the data-line-direction (Y), a second non-zero angle (θ2) is formed between a rubbing direction (11) of the alignment film and the slit-direction (13) of the second electrode, and an angle (θ4) formed between the rubbing direction (11) of the alignment film and the data-line-direction (Y) is greater than the second non-zero angle (θ2);
**characterized in that** the angle (θ4) between the rubbing direction (11) of the alignment film and the data-line-direction (Y) equals the first non-zero angle (θ1) minus the second non-zero angle (θ2).

2. The array substrate (100) according to Claim 1, wherein the first electrode (01) is electrically connected with a common electrode line of the array substrate; and the second electrode (02) is electrically connected with the drain of the thin film transistor (06).

3. The array substrate (100) according to Claim 1, wherein the first electrode (02) is electrically connected with the drain of the thin film transistor (06); and the second electrode (01) is electrically connected with a common electrode line of the array substrate (100).

4. The array substrate (100) according to any one of Claims 1-3, wherein the first non-zero angle (θ1) is in the range of 20-30 degrees.

5. The array substrate (100) according to any one of Claims 1-3, wherein the second non-zero angle (θ2) is in the range of 5-9 degrees.

6. A liquid crystal display apparatus, comprising: an array substrate (100) and a color filter substrate assembled together to form a cell, wherein the array substrate (100) is in accordance with any one of Claims 1-5, and a rubbing direction of an alignment film on the color filter substrate is opposed to the rubbing direction (11) of the alignment film of the array substrate (100).

7. A method for alignment rubbing of an array substrate (100) comprising a gate line (05), a data line (03), and a pixel unit defined by the gate line (05) and the data line (03) intersecting each other, as well as an alignment film formed on the array substrate, wherein the pixel unit each comprises a thin film transistor (06), a plate-like first electrode, and a second electrode provided with parallel slits (04), the method comprising:
setting a forward speed of the array substrate, as well as an axial direction (14) and an angular velocity of a rubbing roller, wherein a linear direction (12), along which the forward speed of the array substrate (100) is taken, is opposed to the data-line-direction (Y) on the array substrate (100), and a third non-zero angle (θ3) is formed between the axial direction (14) of the rubbing roller and the data-line-direction (Y) on the array substrate (100), and a first non-zero angle (θ1) is formed between the data-line-direction (Y) and the slit-direction (13) of the parallel slits (04) of the second electrode of the array substrate (100); and
making the array substrate (100) moved in accordance with the set forward speed, and come into contact with the rubbing roller, in order to rub the alignment film of the array substrate (100), wherein a second non-zero angle (θ2) is formed between the rubbing direction (11) of the alignment film and the slit-direction (13) of the second electrode; the rubbing direction (13) of the alignment film is perpendicular to the axial direction (14) of the rubbing roller, and an angle (θ4) formed between the rubbing direction (11) of the alignment film and the data-line-direction (Y) is greater than the second non-zero angle (θ2); **characterized in that** the angle (θ4) between the rubbing direction (11) of the alignment film and the data-line-direction (Y) equals the first non-zero angle (θ1) minus the second non-zero angle (θ2).

## Patentansprüche

1. Array-Substrat (100), umfassend eine Gate-Leitung (05), eine Datenleitung (03) und eine Pixeleinheit, die mittels der sich gegenseitig schneidenden Gate-Leitung (05) und Datenleitung (03) definiert ist, und außerdem einen Ausrichtungsfilm, der auf dem Array-Substrat gebildet ist;
wobei jede Pixeleinheit einen Dünnfilmtransistor (06), eine plattenartige erste Elektrode und eine zweite Elektrode, die mit parallelen Schlitzen (04) ausgebildet ist, umfasst; und
wobei ein erster, von Null verschiedener Winkel (θ1) zwischen der Schlitzrichtung (13) der zweiten Elektrode und der Datenleitungs-Richtung (Y) gebildet ist, und wobei ein zweiter, von Null verschiedener Winkel (θ2) gebildet ist zwischen einer Reibrichtung (11) des Ausrichtungsfilms und der Schlitzrichtung (13) der zweiten Elektrode, und wobei ein Winkel (θ4), der zwischen der Reibrichtung (11) des Ausrichtungsfilms und der Datenleitungs-Richtung (Y) gebildet ist, größer ist als der zweite, von Null verschiedene Winkel (θ2),
**dadurch gekennzeichnet, dass** der Winkel (θ4) zwischen der Reibrichtung (11) des Ausrichtungsfilms und der Datenleitungs-Richtung (Y) dem ersten von Null verschiedenen Winkel (θ1) minus dem zweiten von Null verschiedenen Winkel (θ2) entspricht.

2. Array-Substrat (100) gemäß Anspruch 1, wobei die erste Elektrode (01) elektrisch mit einer gemeinsame Elektrode-Leitung des Array-Substrats verbunden ist; und wobei die zweite Elektrode (02) elektrisch mit dem Drain des Dünnfilmtransistors (06) verbunden ist.

3. Array-Substrat (100) gemäß Anspruch 1, wobei die erste Elektrode (02) elektrisch mit dem Drain des Dünnfilmtransistors (06) verbunden ist und wobei die zweite Elektrode (01) elektrisch mit einer gemeinsame Elektrode-Leitung des Array-Substrates (100) verbunden ist.

4. Array-Substrat (100) gemäß einem der Ansprüche 1-3, wobei der erste von Null verschiedene Winkel (θ1) in dem Bereich von 20-30 Grad liegt.

5. Array-Substrat gemäß einem der Ansprüche 1-3, wobei der zweite von Null verschiedene Winkel (θ2) im dem Bereich von 5-9 Grad liegt.

6. Flüssigkristallanzeigevorrichtung, umfassend: ein Array-Substrat (100) und ein Farbfiltersubstrat, die zur Bildung einer Zelle zusammengesetzt sind, wobei das Array-Substrat (100) gemäß einem der Ansprüche 1-5 ist, und wobei eine Reibrichtung des Ausrichtungsfilmes auf dem Farbfiltersubstrat entgegengesetzt zu der Reibrichtung (11) des Ausrichtungsfilmes auf dem Array-Substrat (100) ist.

7. Verfahren zum Ausrichtungsreiben auf einem Array-Substrat (100), umfassend eine Gate-Leitung (05), eine Datenleitung (03) und eine Pixeleinheit, die mittels der sich gegenseitig schneidenden Gate-Leitung (05) und Datenleitung (03) definiert ist, sowie einen Ausrichtungsfilm, der auf dem Array-Substrat gebildet ist, wobei jede Pixeleinheit einen Dünnfilmtransistor (06), eine plattenartige erste Elektrode und eine zweite Elektrode, die mit parallelen Schlitzen (04) versehen ist, umfasst, wobei das Verfahren umfasst:
Einstellen einer Vorwärtsgeschwindigkeit des Array-Substrates sowie einer Axialrichtung (14) und einer Winkelgeschwindigkeit einer Reibwalze, wobei eine lineare Richtung (12), entlang welcher die Vorwärtsgeschwindigkeit des Array-Substrates (100) gewählt ist, entgegengesetzt ist zu der Datenleitungs-Richtung (Y) auf dem Array-Substrat (100), und wobei ein dritter, von Null verschiedener Winkel (θ3) gebildet wird zwischen der Axialrichtung (14) der Reibwalze und der Datenleitungs-Richtung (Y) auf dem Array-Substrat (100), und wobei ein erster, von Null verschiedener Winkel (θ1) gebildet wird zwischen der Datenleitungs-Richtung (Y) und der Schlitzrichtung (13) der parallelen Spitze (04) der zweiten Elektrode des Array-Substrates (100); und
bewirken, dass sich das Array-Substrat (100) gemäß der gewählten Vorwärtsgeschwindigkeit bewegt und in Kontakt mit der Reibwalze kommt, um den Ausrichtungsfilm auf dem Array-Substrat (100) zu reiben, wobei ein zweiter, von Null verschiedener Winkel (θ2) gebildet wird zwischen der Reibrichtung (11) des Ausrichtungsfilms und der Schlitzrichtung (13) der zweiten Elektrode; wobei die Reibrichtung (13) des Ausrichtungsfilms senkrecht zu der Axialrichtung (14) der Reibwalze ist, und wobei ein Winkel (θ4), der zwischen der Reibrichtung (11) des Ausrichtungsfilms und der Datenleitungs-Richtung (Y) gebildet ist, größer ist als der zweite, von Null verschiedene Winkel (θ2); **dadurch gekennzeichnet, dass** der Winkel (θ4) zwischen der Reibrichtung (11) des Ausrichtungsfilms und der Datenleitungs-Richtung (Y) dem ersten von Null verschiedenen Winkel (θ1) minus dem zweiten von Null verschiedenen Winkel (θ2) entspricht.

## Revendications

1. Un substrat de réseau (100), comprenant une ligne de grille (05), une ligne de données (03) et une unité de pixel définie par la ligne de grille (05) et la ligne de données (03) qui se croisent l'une l'autre, ainsi qu'un film d'alignement formé sur le substrat de réseau ;
dans lequel l'unité de pixel comprend chacune un transistor à couches minces (06), une première électrode en forme de plaque et une deuxième électrode ayant des fentes parallèles (04) ; et dans lequel un premier angle non nul (θ1) est formé entre la direction des fentes (13) de la deuxième électrode et la direction (Y) de la ligne de données, un deuxième angle non nul (θ2) est formé entre une direction de frottage (11) du film d'alignement et la direction des fentes (13) de la deuxième électrode, et un angle (θ4) formé entre la direction de frottage (11) du film d'alignement et la direction (Y) de la ligne de données est supérieure au deuxième angle non nul (θ2) ;
**caractérisé en ce que** l'angle (θ4) entre la direction de frottage (11) du film d'alignement et la direction (Y) de la ligne de données est égal au premier angle non nul (θ1) moins le deuxième angle non nul (θ2).

2. Le substrat de réseau (100) selon la revendication 1, dans lequel la première électrode (01) est connectée électriquement à une ligne d'électrode commune du substrat de réseau ; et la deuxième électrode (02) est connectée électriquement au drain du transistor à couches minces (06).

3. Le substrat de réseau (100) selon la revendication 1, dans lequel la première électrode (02) est connectée électriquement au drain du transistor à couches minces (06) ; et la deuxième électrode (01) est connectée électriquement à une ligne d'électrode commune du substrat de réseau (100).

4. Le substrat de réseau (100) selon l'une quelconque des revendications 1 à 3, dans lequel le premier angle non nul (θ1) est dans l'intervalle allant de 20 à 30 degrés.

5. Le substrat de réseau (100) selon l'une quelconque des revendications 1 à 3, dans lequel le deuxième angle non nul (θ2) est dans l'intervalle allant de 5 à 9 degrés.

6. Un dispositif d'affichage à cristaux liquides, comprenant : un substrat de réseau (100) et un substrat de filtre coloré assemblés ensemble pour former une cellule, dans lequel le substrat de réseau (100) est selon l'une quelconque des revendications 1 à 5, et une direction de frottage d'un film d'alignement sur le substrat de filtre coloré est opposée à la direction de frottage (11) du film d'alignement du substrat de réseau (100).

7. Un procédé de frottage d'alignement d'un substrat de réseau (100) comprenant une ligne de grille (05), une ligne de données (03) et une unité de pixel définie par la ligne de grille (05) et la ligne de données (03) qui se croisent l'une l'autre, ainsi qu'un film d'alignement formé sur le substrat de réseau, dans lequel l'unité de pixel comprend chacune un transistor à couches minces (06), une première électrode en forme de plaque et une deuxième électrode ayant des fentes parallèles (04), le procédé comprenant :
fixer une vitesse d'avancement du substrat de réseau, ainsi qu'une direction axiale (14) et une vitesse angulaire d'un rouleau de frottage, dans lequel une direction linéaire (12) le long de laquelle la vitesse d'avancement du substrat de matrice est prise, est opposée à la direction de ligne de données (Y) sur le substrat de réseau (100), et un troisième angle non nul (θ3) est formé entre direction axiale (14) du rouleau de frottage et la direction de ligne de données (Y) sur le substrat de réseau (100), et un premier angle non nul (θ1) est formé entre la direction de ligne de données (Y) et la direction (13) des fentes parallèles (04) de la deuxième électrode du substrat de réseau (100) ; et
faire déplacer le substrat de réseau (100) avec la vitesse d'avancement fixée, et venir en contact avec le rouleau de frottage de manière à frotter le film d'alignement du substrat de réseau (100), dans lequel un deuxième angle non nul (θ2) est formé entre la direction de frottage (11) du film d'alignement et la direction (13) des fentes de la deuxième électrode ; la direction de frottage (13) du film d'alignement est perpendiculaire à la direction axiale (14) du rouleau de frottage, et un angle (θ4) formé entre la direction de frottage (11) du film d'alignement et la direction de ligne de données (Y) est supérieur au deuxième angle non nul (θ2) ;
**caractérisé en ce que** l'angle (θ4) entre la direction de frottage (11) du film d'alignement et la direction de ligne de données (Y) est égal au premier angle non nul (θ1) moins le deuxième angle non nul (θ2).
